Europäisches Patentamt

European Patent Office

Office européen des brevets

(19)

(11) Numéro de publication : **0 517 552 A1**

# (12) DEMANDE DE BREVET EUROPEEN

(21) Numéro de dépôt : **92400793.3**

(51) Int. Cl.$^5$ : **B23P 19/04**, B23P 19/00

(22) Date de dépôt : **24.03.92**

(30) Priorité : **03.06.91 FR 9106651**

(43) Date de publication de la demande :
**09.12.92 Bulletin 92/50**

(84) Etats contractants désignés :
**AT BE CH DE DK ES GB IT LI NL SE**

(71) Demandeur : **FERCO INTERNATIONAL Usine de Ferrures de Bâtiment Société à responsabilité limitée**
**2, rue du Vieux-Moulin Reding**
**F-57400 Sarrebourg (FR)**

(72) Inventeur : **Kautt, Jean-Jacques**
**24 rue Pertois**
**F-67000 Strasbourg (FR)**

(74) Mandataire : **Rodhain, Claude et al**
**Cabinet Claude Rodhain 30, rue la Boétie**
**F-75008 Paris (FR)**

(54) **Machine de pose de ferrures sur des profilés, notamment de pose de gâches sur des profilés destinés, après assemblage ultérieur, à constituer des dormants de porte ou fenêtre.**

(57) Cette machine comprend un ensemble automatisé comportant :
— un support (20) de profilé (10),
— des moyens translateurs (30), pour déplacer longitudinalement le profilé sur ce support jusqu'à amener l'emplacement de pose de la ferrure en regard d'un axe prédéterminé ($\Delta_1$) de la machine,
— des moyens de préhension (32), pour immobiliser le profilé sur son support après action des moyens translateurs,
— des moyens de dépose de ferrures, comportant un bras manipulateur (40) propre à prélever une ferrure (70) dans une réserve et à déposer la ferrure ainsi prélevée sur le profilé audit emplacement de pose,
— des moyens de recentrage, pour ajuster la position de la ferrure ainsi déposée sur le profilé et la maintenir en cette position, et
— des moyens de fixation (50), notamment de fixation par vissage, pour solidariser la ferrure au profilé.

FIG_1

EP 0 517 552 A1

L'invention concerne une machine de pose de ferrures, notamment de gâches de verrouillage de portes ou fenêtres, sur des segments de profilé, notamment pour des profilés destinés, après'assemblage ultérieur, à constituer les éléments de portes, de fenêtres ou de portes-fenêtres.

Ces profilés peuvent être des profilés en poly(chlorure de vinyle) (PVC), en aluminium ou en bois.

Comme on le verra par la suite, l'invention concerne exclusivement la pose des ferrures sur des segments de profilé « bruts », c'est-à-dire sur les traverses, montants ou meneaux qui serviront, dans un stade ultérieur de la fabrication, à réaliser un cadre (ouvrant ou dormant) de la porte ou de la fenêtre, étant bien entendu que les opérations réalisées par la machine de l'invention seront effectuées, certes, après découpe des profilés, mais toujours avant assemblage des différents éléments.

Quant aux ferrures concernées, il s'agit typiquement des gâches servant à la fermeture et au verrouillage des ouvrants sur leurs dormants, ces pièces, qui peuvent prendre diverses formes (gâches dites « gâche-galet », « gâche-verrou », etc.) étant en elles-mêmes des pièces bien connues.

Par ailleurs, par « pose », on entendra l'ensemble des opérations de positionnement de la gâche à l'emplacement voulu et de solidarisation de la gâche au profilé en cet emplacement, cette solidarisation pouvant être réalisé par divers moyens tels que vissage (par une ou plusieurs vis), encliquetage, encliquetage-vissage, etc.

Jusqu'à présent, la pose des gâches sur les montants et les traverses était toujours réalisée sur des cadres déjà montés, donc après l'étape d'assemblage. Cette pose était effectuée manuellement par un opérateur, donc avec une faible productivité et avec une part importante de subjectivité dans la précision et la rapidité. En effet, en particulier dans le cas des gâches fixées directement en applique sur le profilé au fond d'une rainure de celui-ci (c'est-à-dire sans entaillage ou mortaisage préalable), la pose nécessitait l'utilisation d'un gabarit par l'opérateur, et son exactitude dépendait donc pour une large part de l'habileté de celui-ci et du soin qu'il apportait à l'exécution de son travail.

En outre, la pose sur des cadres déjà constitués imposait une orientation préalable du cadre au moment de la pose, soit au moyen d'un plateau support rotatif soit en obligeant l'opérateur à se déplacer autour du cadre, avec tous les inconvénients corrélatifs de manque de rationalité, et de quasi-impossibilité d'intégrer cette étape à une ligne de production en série.

Les tentatives d'automatisation de cette étape de pose des gâches n'avaient jusqu'à présent été que partielles, par exemple par utilisation d'une machine indiquant à un opérateur le nombre de gâches à poser et leur cotes de positionnement. Mais il s'agissait toujours en fait d'apporter une simple assistance à l'opérateur, sans véritable automatisation impliquant l'absence d'opérateur. En outre, ces tentatives concernaient, ici encore, la pose des gâches sur un cadre déjà assemblé, et non sur un profilé brut.

Le but de la présente invention est de proposer une machine qui pallie l'ensemble de ces inconvénients, en permettant une pose entièrement automatisée des gâches, cette machine étant universelle (c'est-à-dire qu'elle pourra s'adapter par elle-même à des longueurs variables du profilé, et qu'elle pourra poser des gâches de différents types, et même plusieurs gâches de type différent sur un même profilé) et étant, enfin, aisément intégrable à une ligne de production en série.

Ce caractère universel présente l'avantage considérable de permettre une meilleure organisation d'atelier, puisque tous les modèles de fenêtres et de portes pourront être équipés grâce à cette même machine, quelles que soient leurs dimensions et les types de gâches utilisés, d'où un gain de productivité et une économie de matériel et de main d'oeuvre.

Comme on le verra, la machine de l'invention exécute de façon entièrement automatique toutes les opérations comprises entre l'alimentation de la machine par le profilé et l'évacuation du profilé pourvu de ses ferrures (ces étapes d'alimentation et d'évacuation pouvant être, en fonction des besoins, des opérations manuelles, semi-automatiques ou entièrement automatiques, réalisées par des moyens en eux-mêmes connus).

Comme on le verra également, l'invention permet en outre d'incorporer au processus de pose des contrôles inhérents à la machine, ce qui permet d'assurer une vérification de l'exécution correcte des opérations sans pour autant ralentir le processus, d'où une excellente productivité et une parfaite garantie de qualité de la production.

L'idée essentielle de la présente invention consiste à réaliser la pose des ferrures non plus sur des cadres déjà assemblés, comme tel était toujours le cas jusqu'à présent, mais avant assemblage, directement sur les segments bruts de profilé, juste après l'étape de découpe de ces segments de profilé et d'usinage éventuel préalable (dans le cas des gâches devant être posées dans une entaille ou dans une mortaise).

A cet effet, la machine de l'invention est caractérisée par un ensemble automatisé comportant : un support de profilé ; des moyens translateurs, pour déplacer longitudinalement le profilé sur ce support jusqu'à amener l'emplacement de pose de la ferrure en regard d'un axe prédéterminé de la machine ; des moyens de préhension, pour immobiliser le profilé sur son support après action des moyens translateurs; des moyens de dépose de ferrures, comportant un bras manipulateur propre à prélever une ferrure dans une réserve et à déposer la ferrure ainsi prélevée sur le profilé audit emplacement de pose ; des moyens de recentrage, pour ajuster la position de la ferrure ainsi déposée sur le profilé et la maintenir en cette position ; et des moyens de fixation, notamment de fixation par vissage, pour solidariser la ferrure au profilé.

Très avantageusement, les moyens translateurs comprennent une butée mobile venant en contact avec l'extrémité distale du profilé, de manière à entraîner le profilé par poussée en bout et à le déplacer ainsi en le faisant glisser sur le support. Ces moyens translateurs peuvent t en outre porter lesdits moyens de préhension.

De préférence, la machine comprend en outre des moyens de mise en référence du profilé, ces moyens comportant une butée fixe, escamotable, située en vis-à-vis de l'extrémité proximale du profilé et coopérant avec la butée mobile des moyens translateurs par l'intermédiaire de moyens pour détecter la venue en contact de cette extrémité proximale avec la butée fixe.

De préférence également, lesdits moyens de recentrage comprennent une pince, déplaçable en translation longitudinale, portée par le bras manipulateur.

En outre, dans un mode de réalisation avantageux, la machine comprend en outre des moyens de lecture automatique de données de pose, notamment du nombre de ferrures à poser sur le profilé, de leur type respectif et de leurs cotes de fixation, et des moyens de commande automatique de la machine en fonction de ces données lues.

On va maintenant décrire un exemple de réalisation de l'invention, en référence aux dessins annexés.

La figure 1 est une vue schématique d'ensemble de la machine de l'invention.

Les figures 2 à 6 illustrent les diverses étapes successives de positionnement du profilé à la cote à laquelle doit être posée la gâche.

Les figures 7 à 12 illustrent les différentes étapes successives de la pose proprement dite de la gâche.

La figure 13 est une vue de détail, en coupe selon XIII-XIII de la figure 1, du guide recevant le profilé et de la pince de préhension permettant de saisir celui-ci.

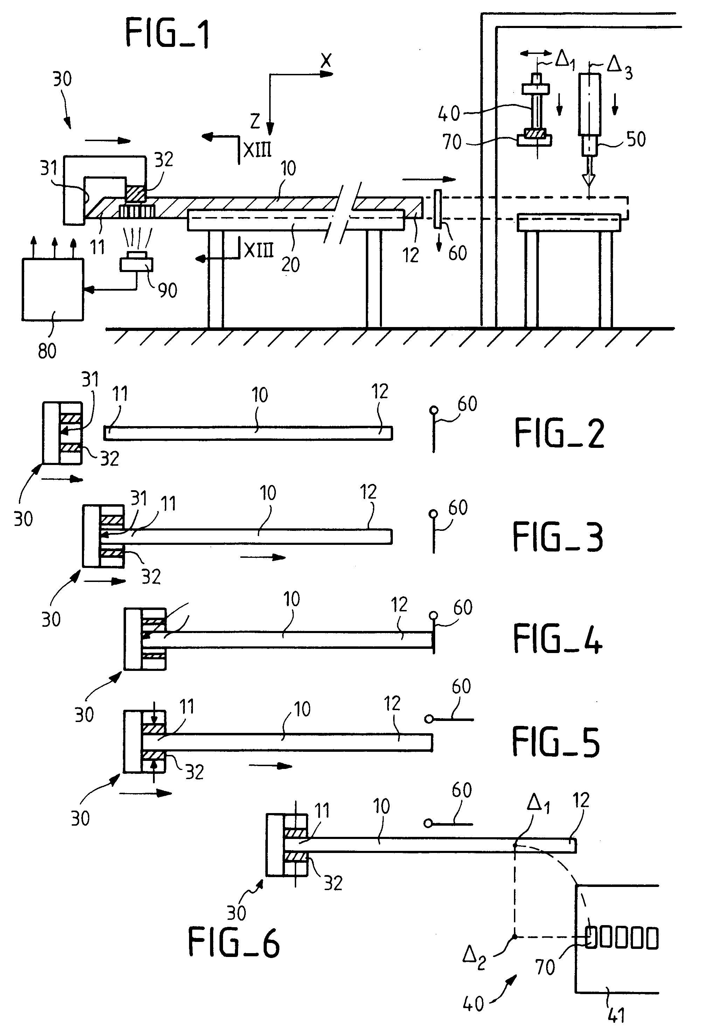

La figure 1 est une vue générale, en élévation, de la machine de l'invention.

Le profilé 10 est reçu dans un guide horizontal 20 le long duquel il peut glisser sous l'effet d'une manipulation opérée par une pince de préhension 30. Ce profilé est déplacé en translation, parallèlement à sa plus grande dimension (direction X de la figure) jusqu'à l'amener sous un manipulateur 40 qui y déposera une gâche à l'emplacement voulu, puis sous un poste de vissage 50 qui procédera à la solidarisation de cette gâche au profilé.

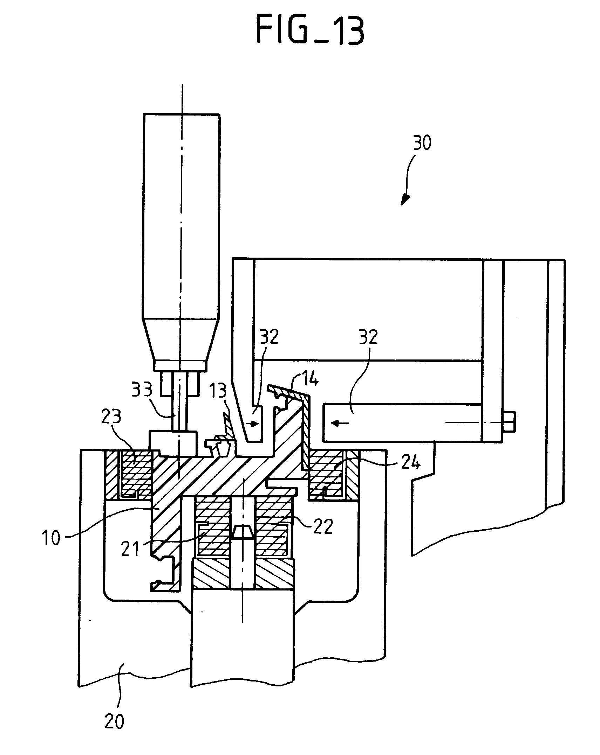

La figure 13 montre le détail du guide 20 et de la pince de préhension 30.

Le guide 20 est avantageusement un guide adaptable à des profilés de différentes sections, ce guide comportant des patins support antifriction horizontaux 21 et 22 et des patins latéraux de centrage 23 et 24, également antifrction. Les patins horizontaux 21 et 22 sont mobiles en translation verticale afin de recevoir différentes formes de profilé ; les patins latéraux 23 et 24 peuvent être, en fonction des besoins, soit fixes, comme sur l'illustration, soit mobiles afin d'épouser les faces latérales de profilés de section variable.

La pince de préhension 30 comporte une face verticale d'appui et de référence 31 (figure 1), permettant de pousser le profilé 10 par son extrémité 11 (extrémité distale) et de le faire ainsi coulisser dans le guide 20 par entraînement de la pince 30, celle-ci étant déplaçable selon la direction X par un système motorisé approprié, avantageusement pourvu d'un codeur permettant de mesurer le déplacement imprimé au profilé par la pince.

La pince 30 comporte en outre des mâchoires 32, visibles plus en détail figure 13, solidaires du chariot mobile portant la face d'appui et de référence 31. Ces mâchoires viennent bloquer le profilé sur le guide une fois que celui-ci a atteint la position voulue. On peut en outre prévoir un appui vertical 33 (figure 13) assurant un maintien complémentaire et un centrage du profilé 10 dans le guide.

On va maintenant décrire la manière dont opère la machine

Tout d'abord, le profilé est amené sur le guide par des moyens de chargement appropriés (non représentés), en eux-mêmes connus.

On peut prévoir par exemple une alimentation axiale, la pince 30 étant alors escamotable, ce qui présente l'avantage de pouvoir aligner la machine de l'invention avec le poste précédent, de manière à réaliser un enchaînement automatique des tâches entre les deux postes ; le profilé est alors poussé par le guide fixe 20 par des moyens d'entraînement appropriés, par exemple des galets motorisés.

Une autre solution consiste à prévoir une alimentation latérale par un manipulateur de chargement, également de type connu.

Le profilé que l'on place ainsi dans le guide est un profilé qui a déjà été mis à longueur (par découpe préalable, avec des extrémités biaises ou droites), le profilé pouvant être éventuellement déjà pourvu de ses joints (tels que 13, 14, figure 13), ces joints étant découpés en même temps que le profilé.

En outre, au cas où la gâche doit être encastrée, le profilé a été préalablement usiné afin de former la mortaise ou l'entaille devant recevoir la gâche.

On va maintenant décrire le positionnement préalable du profilé, en référence aux figures 2 à 6, qui sont des vues schématiques en plan.

Tout d'abord (figure 2), le profilé ayant été déposé dans son guide fixe, on déplace la pince 30 en direction de l'extrémité distale 11 du profilé 10 de manière à rapprocher la face d'appui et de référence 31 de cette extrémité ; pendant cette phase, les mâchoires 32 restent en position ouverte.

Une fois la face 31 venue en contact avec l'extrémité 11 (figure 3), on poursuit le mouvement de la pince 30, qui entraîne alors dans son déplacement le profilé 10 vers la droite (avec les conventions des figures, c'est-à-dire en direction des postes 40 et 50) ; les mâchoires 32 sont toujours en position ouverte.

On poursuit ce mouvement jusqu'à ce que l'extrémité avant 12 du profilé (extrémité proximale) vienne en contact avec une butée de référence 60 (figure 4), et l'on interrompt alors le déplacement de la pince et du profilé. Cette étape correspond à une prise de référence, la butée 60 étant une butée servant à connaître exactement la position absolue de l'extrémité 12 de façon à pouvoir positionner exactement le profilé par rapport aux postes 40 et 50 dans la suite des opérations. La détection du contact avec la butée 60 peut se faire par divers moyens, par exemple par un détecteur lié à la pince 30, qui détectera alors l'effort de réaction résultant du contact avec la butée 60, ou d'un détecteur de contact ou de proximité lié à la butée 60, ou d'une combinaison de ces deux détecteurs. Avantageusement, un détecteur situé légèrement en avant de la butée 60 indique l'arrivée du profilé à proximité de la butée et commande le ralentissement du mouvement de la pince 30, pour permettre une approche finale à vitesse réduite.

On notera que, si le chariot d'entraînement de la pince 30 comporte des moyens permettant de connaître la position absolue de celle-ci, on peut alors mesurer, sans autre manipulation, la longueur du profilé (distance séparant la butée 60 de la face de référence 31 ) et, par exemple, comparer cette valeur à une valeur qui aura été introduite préalablement, soit par l'opérateur soit de façon automatique par des moyens que l'on évoquera plus loin. On voit ainsi, que préalablement à l'opération de pose proprement dite de la gâche, on peut procéder à un contrôle dimensionnel du profilé sans pour autant ralentir l'ensemble du processus.

Ensuite (figure 5), on ferme les mâchoires 32 de la pince 30 de manière à maintenir le profilé, on efface la butée 60 (par exemple au moyen d'un vérin de commande qui la fait pivoter latéralement), et on continue le mouvement de déplacement vers la droite du profilé 10 par entraînement de la pince 30. Ce mouvement est poursuivi jusqu'à la position illustrée figure 6 où, en fonction des cotes de pose de la ferrure, on vient placer l'endroit du profilé devant recevoir la ferrure au droit d'un axe $\Delta_1$ (voir également figure 1), correspondant au point où le manipulateur 40 viendra ensuite déposer une gâche 70 prélevée dans un magasin 41.

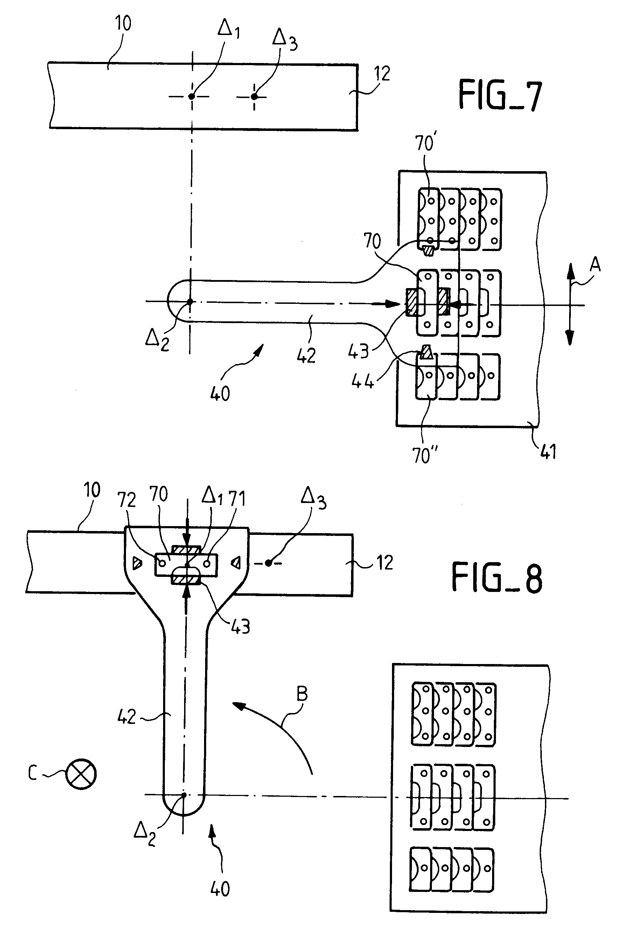

On va maintenant décrire en détail, en référence aux figures 7 à 12, ces opérations de dépose et de fixation des gâches.

Pendant toutes ces opérations, les mâchoires 32 de la pince 30 restent en position refermée.

Le manipulateur 40 comporte (figure 7) un bras 42 à l'extrémité duquel est monté un ensemble comportant une pince de saisie 43 comportant deux mâchoires servant à prélever la gâche 70 en venant la saisir par sa plus grande longueur, et une pince de recentrage 44, dont le rôle sera expliqué par la suite, comprenant deux mâchoires venant en contact avec les extrémités latérales de la gâche.

Tout d'abord, le bras manipulateur vient saisir une gâche 70 dans le magasin 41 en venant se placer au-dessus de celui-ci et en refermant la pince 43.

On notera que le magasin peut comporter plusieurs séries de gâches de types différents (dimensions, nombre de trous de vis, etc.), par exemple trois types de gâches 70, 70′ et 70″. La sélection du type de gâche se fait automatiquement par un mouvement de déplacement transversal du magasin 41 (flèche A), de manière à amener la gâche appropriée sous la pince de saisie 43.

Une fois la gâche ainsi saisie, on vient la placer sur le profilé (figure 8). Ce placement est réalisé par rotation du bras manipulateur autour d'un axe vertical $\Delta_2$ (flèche B) et par abaissement du bras par translation verticale vers le bas (flèche C), de manière à disposer la gâche 70 à l'endroit approprié du profilé, c'est-à-dire au droit de l'axe $\Delta_1$. On notera que, dans cette position, les trous de vis 71 et 72 ne coïncident pas encore avec l'axe $\Delta_3$ de la visseuse.

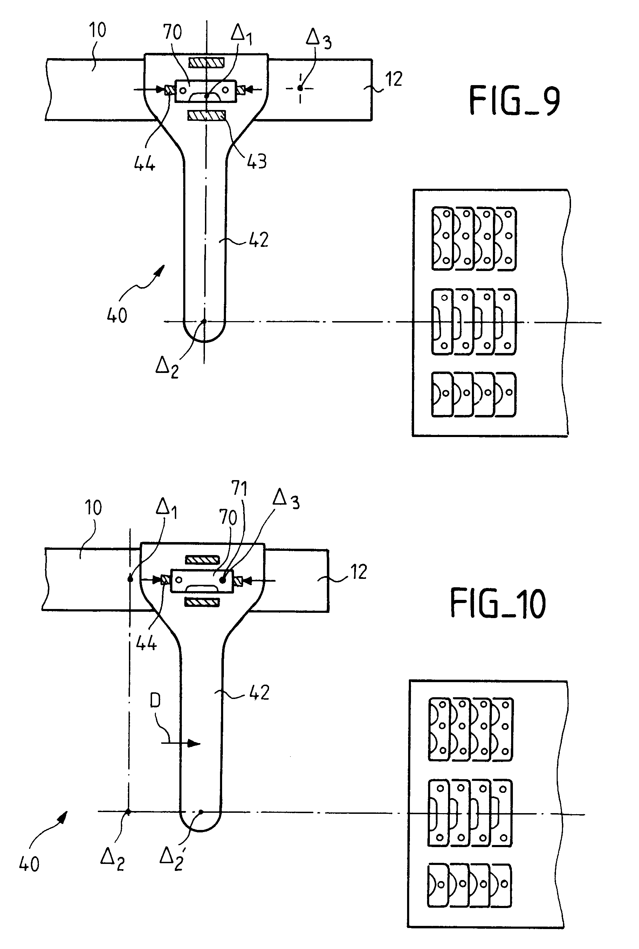

Le manipulateur relâche alors les mâchoires 43 (figure 9) et referme les mâchoires de la pince de recentrage 44, qui jouent le rôle de gabarit pour assurer un positionnement exact de la gâche par rapport à l'axe du bras manipulateur (axe dont la position absolue est connue avec précision).

Ensuite (figure 10), on réalise le positionnement final de la gâche par rapport à l'axe de la visseuse. A cet effet, le manipulateur 40 est capable d'un déplacement horizontal en translation, parallèlement à l'axe du profilé, ce qui permet (flèche D, l'axe $\Delta_2$ venant en $\Delta'_2$) de déplacer l'ensemble constitué par le bras manipulateur 42 et la gâche 70, parfaitement centré par rapport au bras 42 grâce à la pince 44, de manière à venir placer le premier trou de vis 71 très exactement sous l'axe $\Delta_3$ de la visseuse. Les mâchoires de la pince de centrage 44 restent bien entendu en position refermée, afin de maintenir la gâche en place pendant l'opération de vissage proprement dite.

On abaisse alors la visseuse 50 (qui et d'un type en lui-même connu) verticalement en translation, de manière à introduire une vis dans le trou de vis 71 et y serrer cette vis. On peut utiliser à cet effet des vis autoforeuses et autotaraudeuses, avec un système de distribution et d'alimentation automatique de la visseuse, ce système étant en lui-même également de type connu (système à bol vibrant notamment).

On notera que la solidarisation de la gâche au profilé par vissage n'est pas le seul mode de fixation possible. On peut notamment envisager, en variante ou en complément du vissage, un encliquetage de la gâche dans une rainure du profilé. Dans ce cas, la gâche est déposée sur la rainure avec un léger décalage par rapport au logement ou à la rainure devant la recevoir et on abaisse un doigt, disposé à l'endroit de la tête de visseuse, pourvu d'un embout conique venant s'introduire dans le fraisage du trou de vis ; la poursuite de la descente du doigt conique vient placer exactement la gâche à l'endroit voulu (dans ce cas, la pince de recentrage 44 est ouverte), et la gâche est finalement enfoncée sous la lèvre supérieure de la rainure, réalisant ainsi l'encliquetage voulu. En variante, pour éviter de risquer de détériorer certains guidages, on peut prévoir, à la place du doigt vertical, un doigt horizontal pour soulager le mécanisme qui vient pousser la gâche dans le profilé avant de la visser.

Par ailleurs, dans le cas de vis pour lesquelles il est nécessaire de percer un avant-trou, on peut prévoir, juste à côté du poste de vissage 50, un poste additionnel de perçage qui réalise cet avant-trou, une étape supplémentaire du déplacement du profilé étant prévue pour venir percer préalablement cet avant-trou à l'endroit voulu.

Une fois la première vis posée, il n'est plus nécessaire de maintenir en place la gâche sur le profilé, puisque ces deux éléments sont maintenant solidarisés en un point.

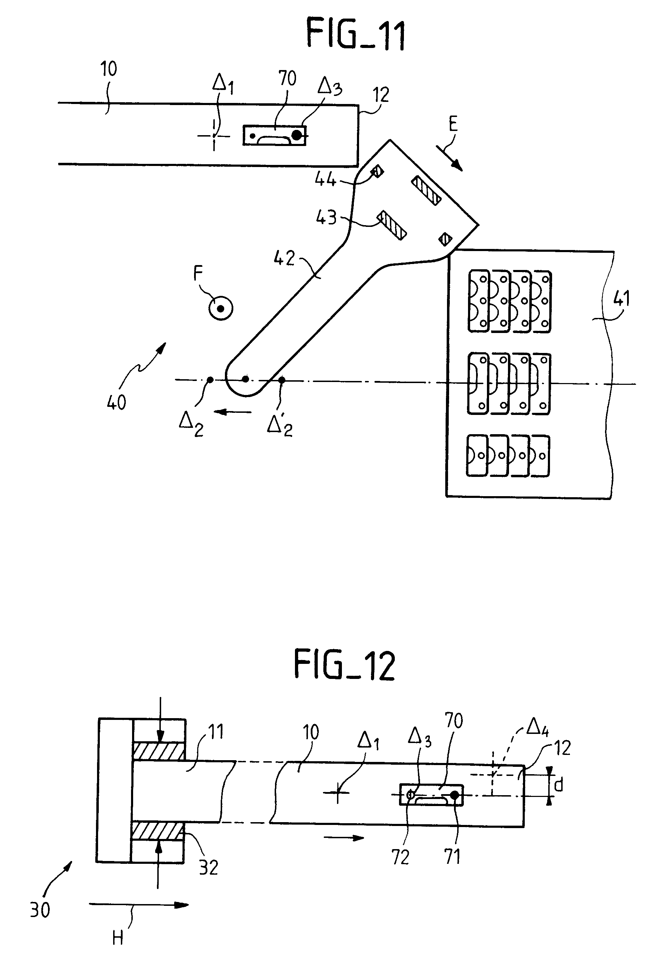

On peut alors écarter le bras manipulateur (figure 11): pour ce faire, après ouverture des mâchoires de la pince 44, on soumet le bras 42 à la fois à un mouvement de remontée (flèche F) afin de le dégager du profilé, à un mouvement inverse de rotation (flèche E) afin de le faire revenir vers le magasin 41 et à un mouvement de translation longitudinal vers la gauche (flèche G), afin de repositionner son axe de rotation de $\Delta'_2$ à $\Delta_2$ (mouvement inverse de celui de la figure 10).

L'opération suivante, illustrée figure 12 et qui peut avantageusement réalisée en simultanéité avec l'opération de la figure 11, consiste à faire avancer le profilé de manière à placer le second trou de vis 72 sous l'axe $\Delta_3$ de la visseuse par un déplacement approprié (flèche H) de la pince de préhension 30, les mâchoires 32 restant bien entendu en position refermée. On peut alors fixer la seconde vis, de la même manière que la première (ceci, bien entendu, dans le cas où la gâche doit être fixée par plusieurs vis). Au cas où le second trou est désaxé transveisalement par rapport au premier, on peut prévoir un second poste de vissage, dont l'axe $\Delta_4$ sera décalé transversalement d'un écart d par rapport à l'axe $\Delta_3$, le déplacement du profilé étant alors commandé de manière à amener le trou de vis correspondant au droit de cet axe.

Une fois la première gâche posée, si plusieurs gâches doivent être posées sur le profilé on procède à la pose de la seconde gâche et des suivantes par un processus analogue, le profilé étant avancé à chaque fois de la longueur voulue par entraînement au moyen de la pince 30. On notera que l'opération de saisie de la gâche (mouvement du manipulateur illustré figures 7 et 8) peut être exécutée en même temps que ce mouvement d'avance, « en temps masqué », permettant ainsi d'accroître encore la cadence de production de la machine.

Une fois la dernière gâche posée, on évacue le profilé, cette étape étant réalisée par des moyens (non illustrés) en eux-mêmes à la portée de l'homme du métier. On peut par exemple prévoir que la pince poursuit son mouvement d'avance avec une course suffisante pour aller au-delà du manipulateur, ou encore que la pince s'arrête au droit de la visseuse, un système avec un doigt entraîné par un vérin venant pousser le profilé hors de la machine, ou encore prévoir un train de galets motorisés venant en pression contre les faces latérales du profilé pour permettre son évacuation.

Enfin, en ce qui concerne l'introduction des données relatives à la pose des gâches (nombre de gâches, type de gâches, cotes de vissage, etc.) ces données peuvent être avantageusement introduites de façon entièrement automatique, par exemple au moyen d'un système informatisé 80 (figure 1) recevant les informations captées par un lecteur de code à barres 90 et pilotant la machine en fonction des informations ainsi lues.

On pourra ainsi, avec une même machine, poser les gâches sur des profils de types et de dimensions très variés, l'étiquette d'identification portant le code à barres ayant été placée au moment de la découpe du profilé en fonction du type d'élément correspondant à ce profilé (montant, traverse, etc.) et du type de cadre (ouvrant, dormant, porte, fenêtre, etc.) ainsi que des dimensions de ce cadre, dimensions qui conditionnent le nombre, l'emplacement et la nature des ferrures et des gâches.

Bien entendu, ce mode d'introduction des données n'est pas limitatif et bien d'autres systèmes, manuels ou automatiques, peuvent être envisagés, à partir de techniques en elles-mêmes connues.

**Revendications**

1. Une machine de pose de ferrures, notamment de gâches de verrouillage de portes ou fenêtres, sur des segments de profilé, notamment pour des profilés destinés, après assemblage ultérieur, à constituer des dormants de porte ou de fenêtre, caractérisée par un ensemble automatisé comportant :
   - un support (20) de profilé (10),
   - des moyens translateurs (30), pour déplacer longitudinalement le profilé sur ce support jusqu'à amener l'emplacement de pose de la ferrure en regard d'un axe prédéterminé ($\Delta_1$) de la machine,

- des moyens de préhension (32), pour immobiliser le profilé sur son support après action des moyens translateurs,

- des moyens de dépose de ferrures, comportant un bras manipulateur (42) propre à prélever une ferrure (70) dans une réserve (41) et à déposer la ferrure ainsi prélevée sur le profilé audit emplacement de pose,

- des moyens de recentrage (44), pour ajuster la position de la ferrure ainsi déposée sur le profilé et la maintenir en cette position, et

- des moyens de fixation (50), notamment de fixation par vissage, pour solidariser la ferrure au profilé.

2. La machine de la revendication 1, dans laquelle les moyens translateurs (30) comprennent une butée mobile (31) venant en contact avec l'extrémité distale (11) du profilé, de manière à entraîner le profilé par poussée en bout et à le déplacer ainsi en le faisant glisser sur le support.

3. La machine de la revendication 1, dans laquelle les moyens translateurs (30) portent lesdits moyens de préhension (32).

4. La machine de la revendication 2, comprenant en outre :

- des moyens de mise en référence du profilé, ces moyens comportant une butée fixe (60), escamotable, située en vis-à-vis de l'extrémité proximale (12) du profilé et coopérant avec la butée mobile (31) des moyens translateurs par l'intermédiaire de moyens pour détecter la venue en contact de cette extrémité proximale avec la butée fixe.

5. La machine de la revendication 1, dans laquelle lesdits moyens de recentrage (44) comprennent une pince, déplaçable en translation longitudinale, portée par le bras manipulateur (42).

6. La machine de la revendication 1, comprenant en outre :

- des moyens de lecture automatique de données de pose (90), notammment du nombre de ferrures à poser sur le profilé, de leur type respectif et de leurs cotes de fixation, et

- des moyens de commande automatique de la machine (80) en fonction de ces données lues.

FIG_1

FIG_2

FIG_3

FIG_4

FIG_5

FIG_6

FIG_7

FIG_8

FIG_9

FIG_10

# FIG_11

# FIG_12

# FIG_13

EP 0 517 552 A1

Office européen
des brevets

**RAPPORT DE RECHERCHE EUROPEENNE**

Numero de la demande

EP   92 40 0793

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 825 144 (FENSTERTECHNIK)<br>* le document en entier * | 1-3 | B23P19/04<br>B23P19/00 |
| A | US-A-4 987 676 (QUAD SYSTEMS)<br>* colonne 2, ligne 21 - ligne 44 *<br>* colonne 9, ligne 22 - ligne 41 * | 1,5 | |
| A | DE-A-2 166 857 (UNIQUICK GIETZELT)<br>* figures * | 1 | |
| A | FR-A-2 560 091 (DROUOT)<br>* page 2, ligne 19 - ligne 25 * | 4,6 | |
| A | EP-A-0 401 094 (FERCO)<br>* colonne 5, ligne 30 - ligne 34 * | 1 | |

DOMAINES TECHNIQUES
RECHERCHES (Int. Cl.5)

B23P
E06B
E05B

Le présent rapport a été établi pour toutes les revendications

| Lieu de la recherche | Date d'achèvement de la recherche | Examinateur |
|---|---|---|
| LA HAYE | 26 AOUT 1992 | RIS M. |